(19) Europäisches Patentamt
European Patent Office
Office européen des brevets

(11) **EP 1 091 204 A2**

(12) **EUROPÄISCHE PATENTANMELDUNG**

(43) Veröffentlichungstag:
**11.04.2001 Patentblatt 2001/15**

(51) Int. Cl.⁷: **G01N 19/02**, G01N 33/20

(21) Anmeldenummer: **00121642.3**

(22) Anmeldetag: **04.10.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **06.10.1999 DE 19947955**

(71) Anmelder: **Thyssen Krupp Stahl AG**
**40211 Düsseldorf (DE)**

(72) Erfinder:
• **Masarczyk, Peter Paul, Dr.-Ing.**
**44791 Bochum (DE)**
• **Struppek, Thomas**
**59368 Werne (DE)**

(74) Vertreter: **Cohausz & Florack**
**Patentanwälte**
**Kanzlerstrasse 8a**
**40472 Düsseldorf (DE)**

(54) **Verfahren zur Ermittlung der Reibungseigenschaften von Blech bei dessen Umformung und Messapparatur zur Durchführung des Verfahrens**

(57)   Die Erfindung betrifft ein Verfahren und eine Meßapparatur zur Ermittlung der Reibungseigenschaften von Blech bei dessen Umformung. Dafür wird eine streifenförmige Blechprobe (1) zwischen zwei Klemmbacken (2,3) eingespannt und mittels eines Zugorgans (9) vorzugsweise mit konstanter Zuggeschwindigkeit durchgezogen. Während des Durchziehens wird die Flächenpressung ($F_N$) kontinuierlich erhöht. Aus den einander zugeordneten Werten für die Flächenpressung ($F_N$) und für die Ziehkraft ($F_Z$) werden nach der bekannten Formel $\mu = F_R/F_N$ die von der Flächenpressung abhängigen Reibungseigenschaften errechnet.

Fig. 1

**Beschreibung**

Da die Reibungseigenschaften von Blech bei dessen Umformung, zum Beispiel beim Tiefziehen, eine maßgebliche Rolle spielen, ist deren Berücksichtigung beim Umformen des Bleches von Bedeutung. Wegen der beim Umformen auftretenden verschieden großen Flächenpressungen ist es erforderlich, die Reibungseigenschaften in Abhängigkeit von verschiedenen Flächenpressungen zu ermitteln. In der Praxis geschieht dies bisher in der Weise, daß nacheinander verschiedene Blechproben bei jeweils unterschiedlicher Flächenpressung durch Klemmbacken gezogen werden. Aus der jeweiligen Flächenpressung und der für das Durchziehen erforderlichen Ziehkraft wird dann für jede Blechprobe deren Reibungseigenschaft ermittelt. Es ist offensichtlich, daß ein solches Verfahren wegen der zwischen den Klemmbacken nacheinander einzuspannenden Blechproben zeitaufwendig ist.

Der Erfindung liegt die Aufgabe zugrunde, ein Verfahren zur Ermittlung der Reibungseigenschaften von Blechen bei deren Umformung zu entwickeln, mit dem sich bei einem breiten Spektrum der Flächenpressung die Reibungseigenschaften schnell ermitteln lassen.

Darüber hinaus liegt der Erfindung die Aufgabe zugrunde, eine Meßapparatur zur Durchführung des vorgenannten Verfahrens zu schaffen.

Die Erfindung betrifft somit ein Verfahren zur Ermittlung der Reibungseigenschaften von Blech bei dessen Umformung, wobei an einer mit vorgegebener Flächenpressung zwischen Klemmbacken eingespannten Blechprobe gezogen wird und dabei die für das Durchziehen erforderliche Ziehkraft gemessen wird. Ein solches Verfahren ist erfindungsgemäß dadurch gekennzeichnet, daß beim Durchziehen der Blechprobe mit einem vorgegebenen Zuggeschwindigkeitsverlauf die Flächenpressung nach einer vorgegebenen Kurve gesteuert wird und aus den einander zugeordneten Werten für die Flächenpressung und die Ziehkraft die von der jeweiligen Flächenpressung abhängigen Reibungseigenschaften bestimmt werden.

Mit dem erfindungsgemäßen Verfahren lassen sich in einem Zug an einer einzigen Blechprobe deren Reibungseigenschaften über ein breites Spektrum der Flächenpressung schnell ermitteln. Denkbar wäre die Ermittlung auch über die Zuggeschwindigkeit oder deren Einbeziehung, wenn diese variiert wird. Im Unterschied zu dem bekannten Verfahren, bei dem einzelne Blechproben jeweils mit konstanter Flächenpressung durch die Klemmbacken gezogen werden, werden bei dem erfindungsgemäßen Verfahren die sonst üblichen Phasen des Überganges von der Haftreibung in die Gleitreibung übersprungen, was sich günstig auf die erforderliche Meßzeit auswirkt, die Aussagekraft des Meßergebnisses aber nicht beeinträchtigt.

Grundsätzlich ist es möglich, daß das Durchziehen der Blechprobe durch die Klemmbacken mit einer Zuggeschwindigkeit nach einer vorgegebenen Geschwindigkeitskurve erfolgt.

Die Änderung der Flächenpressung kann in Stufen, aber auch kontinuierlich erfolgen.

Eine Meßapparatur zur Durchführung des Verfahrens ist gekennzeichnet durch

a) ein Paar Klemmbacken zum Einspannen einer Blechprobe,

b) einen Druckerzeuger für die Klemmbacken, dessen Preßkraft einstellbar ist,

c) ein an der Blechprobe angreifendes Zugorgan, mit dem die Blechprobe mit einem vorgegebenen Zuggeschwindigkeitsverlauf durch die Klemmbakken ziehbar ist,

d) eine Steuereinrichtung für den Druckerzeuger und/oder einen Antrieb für das Zugorgan, mit denen die Preßkraft beim Durchziehen der Blechprobe durch die Klemmbacken variierbar ist. **und**

e) eine Meß- und Auswerteeinrichtung, die aus den über den Ziehweg einander zugeordneten Meßgrößen für die Flächenpressung der Klemmbacken und die an der Blechprobe wirksame Ziehkraft und gegebenenfalls der Zuggeschwindigkeit die Reibungseigenschaften bestimmt.

Vorzugsweise umfaßt die Steuereinrichtung einen Regler für den Druckerzeuger und gegebenenfalls den Antrieb des Zugorgans.

Im folgenden wird die Erfindung anhand einer ein Ausführungsbeispiel für die Meßapparatur darstellenden Zeichnung näher erläutert. Im einzelnen zeigen:

Figur 1     den mechanischen Teil der Meßapparatur.

Figur 2     den steuerungstechnischen Teil der Meßapparatur **und**

Figur 3     einen gegenüber dem steuerungstechnischen Teil der Figur 2 erweiterten steuerungstechnischen Teil.

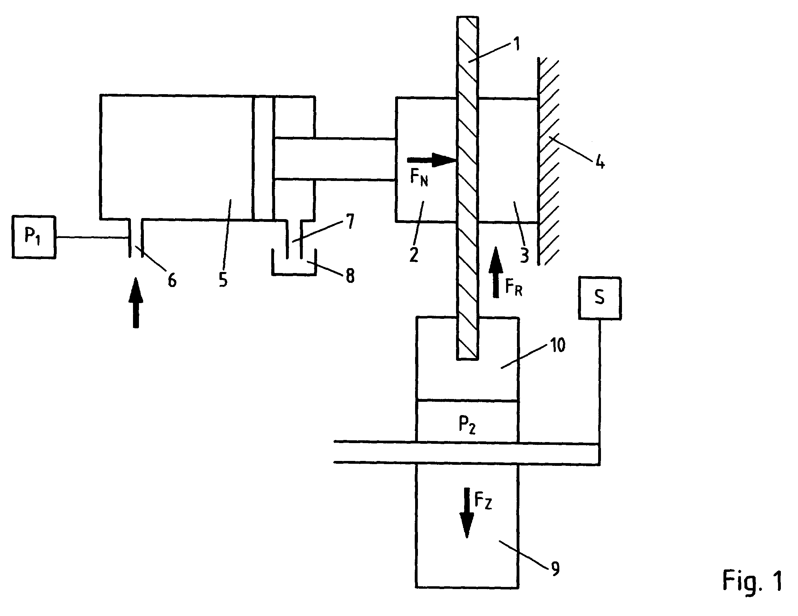

Wie aus Figur 1 ersichtlich, ist eine streifenförmige Blechprobe 1 zwischen einem Paar Klemmbacken 2,3 eingespannt. Die Klemmbacken 2,3 werden von einem schematisch angedeuteten Halter 4 ortsfest gehalten. Ein Druckkrafterzeuger 5 in Form eines Hydraulikzylinders beaufschlagt den Klemmbacken 2 mit einer Preßkraft $F_N$. Das Druckmedium wird über eine Leitung 6 zugeführt, an der ein Druckaufnehmer $P_1$ angeschlossen ist. Der dem druckbeaufschlagten Teil des Hydraulikzylinders 5 gegenüberliegende Teil ist über eine Leitung 7 mit einem Tank 8 zum Volumenausgleich verbunden.

An der Blechprobe 1 greift ein schematisch dargestelltes Zugorgan 9 mittels eines Klemmhalters 10 an. Zwischen dem Zugorgan 9 und dem Klemmhalter 10 liegt ein Meßkraftaufnehmer für die Ziehkraft $F_Z$, die gleich der Haltekraft $F_R$ der Klemmbacken ist. Zur Erfassung des Ziehweges ist ein Wegaufnehmer S mit dem Zugorgan 9 gekoppelt.

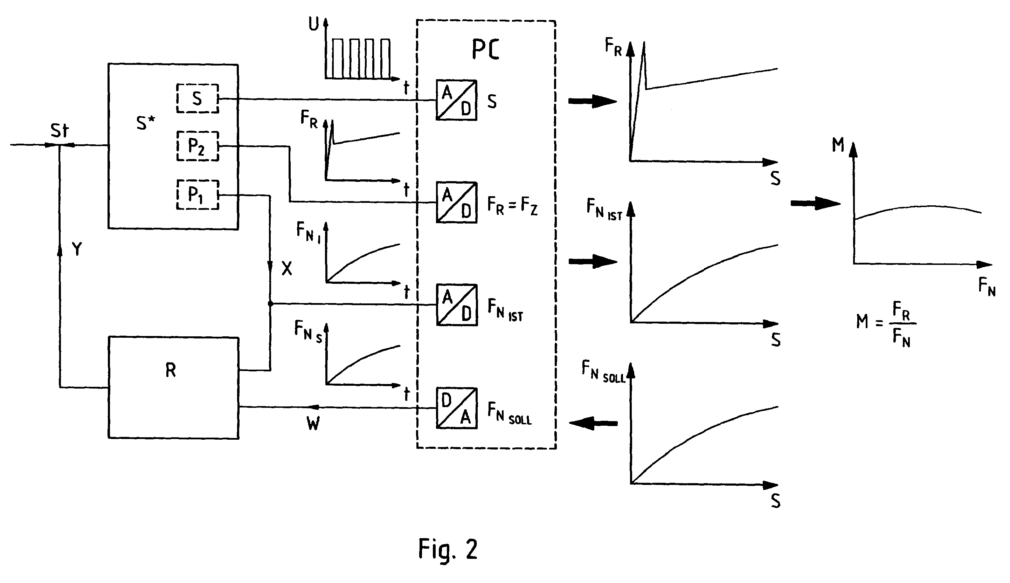

Der steuerungs- und meßtechnische Teil der Meßapparatur gemäß Figur 2 besteht im wesentlichen aus einem Rechner PC und einem Regler für die Preßkraft $F_N$ der Klemmbacken 2,3 beziehungsweise deren Flächenpressung. Am Rechner PC wird eine zeitabhängige Kurve für den Sollwert der Preßkraft $F_{Ns}$ und damit auch für die Flächenpressung der Klemmbacken 2,3 vorgegeben. Diese Kurve wird als Führungsgröße W dem Regler R zugeführt. Der Regler R erhält ferner als Regelgröße von dem Druckmesser $P_1$ ein Meßsignal für den Istwert der Preßkraft $F_{Ni}$. Der Istwert der Preßkraft $F_{Ni}$ wird außerdem dem Rechner PC zugeführt. Der Regler R entwickelt aus dem Soll- und Istwert für die Druckkraft $F_{Ns}$ und $F_{Ni}$ die Stellgröße Y, die auf ein Stellglied St einwirkt, mit der das im Hydraulikzylinder 5 als Regelstrecke S* über die Leitung 6 zu führende Druckmittel geregelt wird. Ferner erhält der Rechner PC vom Wegaufnehmer S ein Signal für den Ziehweg und vom Kraftaufnehmer $P_2$ ein Signal für die Ziehkraft $F_Z$. In der Zeichnung sind beispielhaft die charakteristischen zeitlichen Verläufe für den Soll- und Istwert der Preßkraft beziehungsweise die Flächenpressung $F_{Ns}, F_{Ni}$ und die Ziehkraft $F_R = F_Z$ jeweils oberhalb der zugehörigen Signalleitung für eine konstante Ziehgeschwindigkeit dargestellt. Diese zeitlichen Verläufe entsprechen den ziehwegabhängigen Verläufen, die in der Zeichnung rechts vom Rechner PC dargestellt sind.

Aus den Meßgrößen für die Ziehkraft $F_R = F_Z$ und die Preßkraft $F_{Ni}$ beziehungsweise der Flächenpressung lassen sich nach der Formel $\mu = F_R / F_N$ die Reibungseigenschaften der Blechprobe bei einem breiten Spektrum der Flächenpressung errechnen. Diese Kurve ist rechts außen dargestellt.

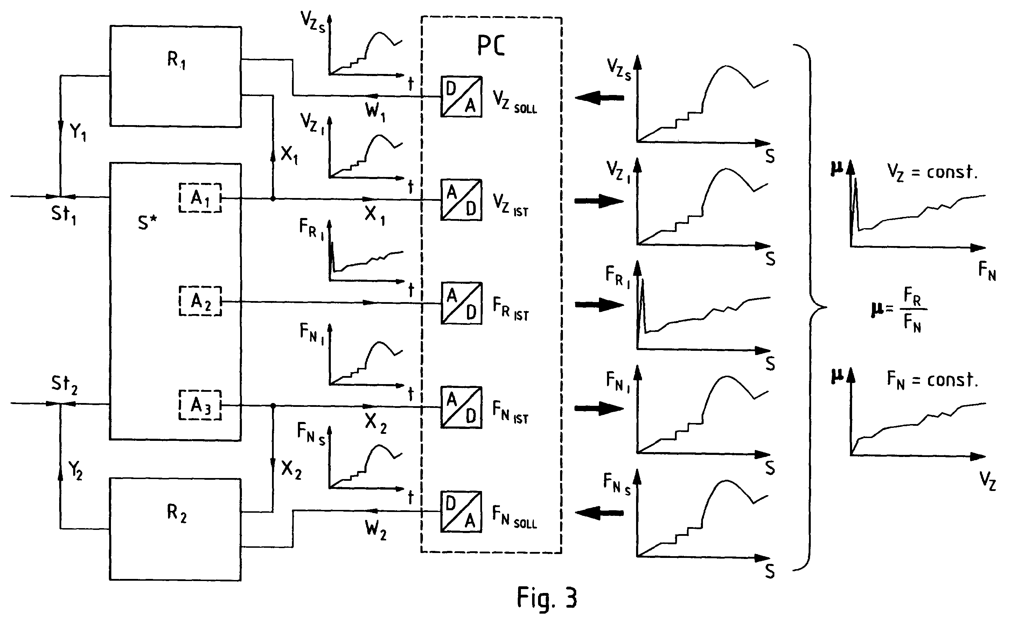

Der steuerungstechnische Teil der Meßapparatur gemäß Figur 3 unterscheidet sich von dem der Figur 2 darin, daß in diesem Fall neben der Preßkraft $F_N$ über den Regler $R_1$ auch die Zuggeschwindigkeit $V_Z$ über den Regler $R_2$ einbezogen wird. In den Diagrammen ist auch dargestellt, daß die Verläufe für die Geschwindigkeit $V_2$ und für die Flächenpressung $F_N$ nicht konstant und kontinuierlich verlaufen, sondern nach einer vorgegebenen beliebigen Kurve.

Da tribologische Unterschiede zwischen den beiden Seiten eines Bleches bestehen können, kann zur Prüfung dieser Eigenschaften einer Blechseite eine Probe geprüft werden, die aus zwei gleichartigen Blechzuschnitten besteht. Die zu vermessenden gleichartigen Blechseiten werden dann den Klemmbacken zugewandt, während die beiden anderen gleichartigen aber nicht zu vermessenden Blechseiten aufeinanderzuliegen kommen.

**Patentansprüche**

1. Verfahren zur Ermittlung der Reibungseigenschaften von Blech bei dessen Umformung, wobei an einer mit einer vorgegebenen Flächenpressung ($F_N$) zwischen Klemmbacken (2,3) eingespannten Blechprobe (1) gezogen wird und dabei die für das Durchziehen erforderliche Ziehkraft ($F_Z$) gemessen wird,
**dadurch gekennzeichnet, daß** beim Durchziehen der Blechprobe (1) mit einem vorgegebenen Zuggeschwindigkeitsverlauf die Flächenpressung ($F_N$) nach einer vorgegebenen Kurve gesteuert wird und aus den einander zugeordneten Werten für die Flächenpressung ($F_N$) und die Ziehkraft ($F_Z$) die von der jeweiligen Flächenpressung ($F_N$) abhängigen Reibungseigenschaften bestimmt werden.

2. Verfahren nach Anspruch 1,
**dadurch gekennzeichnet, daß** das Durchziehen der Blechprobe (1) mit konstanter oder variabler Zuggeschwindigkeit erfolgt.

3. Verfahren nach Anspruch 1 oder 2,
**dadurch gekennzeichnet, daß** die Änderung der Flächenpressung ($F_N$) kontinuierlich erfolgt.

4. Verfahren nach Anspruch 1 oder 2,
**dadurch gekennzeichnet, daß** die Änderung der Flächenpressung ($F_N$) in Stufen erfolgt.

5. Meßapparatur zur Durchführung des Verfahrens nach einem der Ansprüche 1 - 4,
**gekennzeichnet durch**

   a) ein Paar Klemmbacken (2,3) zum Einspannen einer Blechprobe (1),

   b) einen Druckerzeuger (5) für die Klemmbacken (2,3), dessen Druckkraft ($F_N$) einstellbar ist,

   c) ein an der Blechprobe (1) angreifendes Zugorgan (9), mit dem die Blechprobe (1) mit einem vorgegebenen Zuggeschwindigkeitsverlauf durch die Klemmbacken (2,3) ziehbar ist,

   d) eine Steuereinrichtung (St,R) für den Druckerzeuger (5) und/oder einen Antrieb für das Zugorgan (9), mit denen die Druckkraft beziehungsweise die Zuggeschwindigkeit beim Durchziehen der Blechprobe (1) durch die Klemmbacken (2,3) varlierbar ist.
   **und**

e) eine Meß- und Auswerteeinrichtung (PC,P$_1$,P$_2$,S), die aus den über den Ziehweg einander zugeordneten Meßgrößen für die Flächenpressung (F$_N$) der Klemmbacken (2,3) und die an der Blechprobe (1) wirksame Ziehkraft (F$_Z$) und gegebenenfalls der Zuggeschwindigkeit die Reibungseigenschaften bestimmt.

6. Meßapparatur nach Anspruch 4,
   **dadurch gekennzeichnet, daß** die Steuereinrichtung (St,R) einen Regler (R) für den Druckerzeuger (5) und gegebenenfalls den Antrieb des Zugorgans (9) umfaßt.

Fig. 1

Fig. 2

EP 1 091 204 A2

Fig. 3